# FASCICULE DE BREVET EUROPEEN

(11) **EP 2 934 842 B1**
(45) Date de publication et mention de la délivrance du brevet: **15.07.2020**
(21) Numéro de dépôt: 13820810.3
(22) Date de dépôt: 12.12.2013
(51) Int. Cl.: B29C 33/12, B29C 44/12

(54) **DISPOSITIF DE MOULAGE, PROCEDE DE FABRICATION ET PRODUIT D'ISOLATION THERMIQUE OBTENU**
FORMVORRICHTUNG, VERFAHREN ZUR HERSTELLUNG UND ERHALTENES WÄRMEDÄMMUNGSPRODUKT
MOULDING DEVICE, METHOD OF MANUFACTURE, AND THERMAL INSULATION PRODUCT OBTAINED

(30) Priorité: 21.12.2012 FR 1262615
(43) Date de publication de la demande: 28.10.2015
(73) Titulaire: SAINT-GOBAIN WEBER, 94370 Sucy-en-Brie (FR)
(72) Inventeur: KUBINA, Libor, 10000 Strasnice (CZ)
(74) Mandataire: Saint-Gobain Recherche
(86) Numéro de dépôt international: PCT/FR2013/053047
(87) Numéro de publication internationale: WO 2014/096633

(56) Documents cités:
- GB-A- 1 526 316
- US-A- 3 074 112
- US-A- 4 436 276
- US-A- 6 106 449

## Description

L'invention concerne un dispositif de fabrication et un procédé de fabrication d'un produit d'isolation thermique comprenant au moins un panneau isolant sous vide (ou « VIP »), et concerne également le produit d'isolation thermique obtenu.

Qu'il s'agisse du marché du neuf ou de la rénovation, la demande de produits d'isolation, en particulier thermique, performants, est toujours aussi importante. Outre des propriétés d'isolation accrues et le respect du cahier des charges des ouvrages du bâtiment, la demande pour des produits offrant plus de confort d'utilisation, de pérennité, d'économie de matière première, etc. dans une optique notamment de développement durable, est également croissante. Il est particulièrement avantageux, dans cette recherche de matériaux offrant une meilleure isolation thermique que lesdits matériaux présentent également, voire améliorent, d'autres propriétés recherchées dans la construction de bâtiments, notamment en matière d'allégement de charge, de résistance mécanique, d'isolation phonique, etc.

On connait actuellement une grande variété d'isolants thermiques. Parmi les produits les plus courants, on peut citer les isolants fibreux, à base de fibres naturelles ou synthétiques telles que la laine de verre ou la laine de roche, les isolants cellulaires du type polymère expansé tel que le polystyrène expansé ou extrudé, ou les mousses organiques telles que les mousses phénoliques ou de polyuréthane. Les performances thermiques des matériaux isolants courants se traduisent par des valeurs de conductivité thermique À notamment supérieures à 35 mW/m.K, en particulier de l'ordre de 40 mW/m.K.

On peut également avoir recours à des matériaux dans lesquels un vide a été effectué de façon à former par exemple des panneaux sous vide (ou « VIP »). Ces panneaux isolants sont notamment utilisés pour l'isolation de parois murales et fournissent une isolation thermique efficace. Ces isolants sont cependant difficiles à utiliser car ils ne peuvent pas être découpés ni percés, et ils peuvent subir une perte progressive du vide sur des longues durées.

Ces panneaux sous vide peuvent être associés à des couches extérieures positionnées sur leurs faces principales, notamment pour faciliter leur manipulation, pour leur conditionnement ou leur protection, par exemple des couches en matériau organique de type polymère (comme dans le document US6106449). Ces couches sont habituellement rapportées par collage. Le procédé de fabrication de ces panneaux nécessite ainsi plusieurs étapes après la fabrication du panneau sous vide, à savoir au moins une étape de découpe de plaques de matériau organique aux dimensions du panneau sous vide et au moins une étape de collage de chaque plaque à chacune des faces du panneau sous vide. Outre ces différentes étapes, opérées le cas échéant en des lieux différents et multipliant ainsi les opérations de manutention et stockage, cette solidarisation par collage peut poser des problèmes en terme de pérennité, implique généralement le choix d'une colle compatible, et peut engendrer des surcoûts selon les colles et opérations de manutention impliquées.

Ce type de produit d'isolation peut le cas échéant être aussi utilisé en tant que sous-couche isolante de revêtement chauffant, en particulier pour sol de bâtiment. A cet effet, les couches ou plaques de protection des panneaux sous vide sont généralement recouvertes par des tôles en aluminium sur lesquelles sont fixés des tuyaux pour l'acheminement de l'eau pour le chauffage du sol. Les tuyaux sont maintenus par des pattes de fixation vissées dans l'épaisseur des tôles en aluminium et des couches ou plaques. Cette mise en place des tuyaux est néanmoins fastidieuse. En outre, enfoncer des vis ou autres moyens de fixation similaires dans les plaques de protection présente le risque de perforation des panneaux sous vide, pouvant affecter les caractéristiques et performances initiales desdits panneaux.

La présente invention a donc cherché à mettre au point un nouveau produit d'isolation (en particulier thermique) ne présentant pas les inconvénients précités, en particulier présentant de bonnes propriétés d'isolation thermique et une bonne résistance mécanique, facile à réaliser et à installer et de manipulation améliorée, et présentant le cas échéant une bonne tenue au vieillissement. En particulier la présente invention a mis au point un dispositif et un procédé de fabrication d'un produit d'isolation à base d'au moins un panneau sous vide (ou VIP), simples, économiques, et performants, permettant l'obtention du produit tel que recherché. La présente invention a également mis au point un produit dont la mise en œuvre dans une application d'interface isolante (en particulier pour sol de bâtiment), avec agencement de tuyauterie notamment, est facilitée.

Le produit selon l'invention est un produit d'isolation thermique, notamment pour revêtement de sol (tel que destiné par exemple à être intégré dans un plancher chauffant), comprenant au moins un panneau isolant sous vide dans au moins une enveloppe en matériau(x) polymère(s). En d'autres termes, le panneau isolant sous vide (ou VIP) est (entièrement) enfermé dans (ou encapsulé dans ou entouré de ou revêtu de ou au sein de) une enveloppe (ou enrobage ou revêtement) unitaire, en matériau(x) polymère(s), cette enveloppe étant en particulier rigide. Dans un mode de réalisation avantageux, le produit selon l'invention comprend en particulier plusieurs panneaux sous vide tous entourés (ou au sein) d'une (même) enveloppe unitaire de matériau(x) polymérique(s) (ce(s) matériau(x) étant avantageusement thermiquement isolant(s)). On entend par « enveloppe unitaire » une enveloppe monobloc, faite d'une (seule) pièce, continue, ou d'un seul tenant. La matière constitutive de l'enveloppe peut être faite d'un ou plusieurs matériaux polymères. Le ou les panneaux sous vide sont avantageusement revêtus de ladite enveloppe seule, en particulier en un seul matériau polymère, néanmoins, le cas échéant, des éléments et/ou couches et/ou enveloppes supplémentaires peuvent également être ajoutés ou rapportés sur ladite enveloppe.

Le dispositif de moulage mis au point selon l'invention et permettant l'obtention, en une seule étape, du produit d'isolation thermique précédent, est décrit par l'objet de la revendication 1. La rétraction (ou rétractation ou retrait) s'opérant avantageusement au cours de ou suite à l'injection du matériau polymère entre le panneau et la paroi (et généralement avant expansion complète et durcissement de ladite matière polymère). Des dispositifs de moulage mettant en œuvre des aiguilles sont décrits par les documents GB1526316, US3074112 et US4436276.

Par « aiguille » (ou tige), on entend un élément (en particulier rigide) de faible section et de forme généralement allongée, par exemple d'au moins 1 mm environ à quelques millimètres (par exemple jusqu'à 10 mm) de longueur (en fonction de l'épaisseur de polymère à injecter, et le cas échéant de l'épaisseur du panneau sous vide selon la fonction de l'aiguille), et de l'ordre par exemple de 1 mm jusqu'à quelques millimètres (par exemple 3 à 5 mm) de diamètre (l'espace occupé par l'aiguille restant limité de façon à pouvoir être aisément comblée par la matière polymère en expansion après rétraction des aiguilles).

Par « l'obtention en une seule étape du produit d'isolation thermique », on entend l'obtention en une seule étape du revêtement polymérique associé au(x) panneau(x) sous vide, et en particulier l'obtention d'une enveloppe monobloc entourant et revêtant un ou plusieurs panneaux sous vide adjacents. Grâce à l'utilisation du dispositif selon l'invention, il n'est plus nécessaire de découper et coller des plaques de matériau isolant sur un ou des panneaux sous vide. Le dispositif selon l'invention assure une solidarisation efficace du matériau polymérique, avantageusement isolant, au(x) panneau(x) sous vide, et simplifie le procédé de fabrication du produit isolant recherché. Contrairement à la solidarisation traditionnelle de couches par collage, l'invention propose une solidarisation supprimant toute interface entre le panneau sous vide et le matériau extérieur, garantissant une solidarisation pérenne et une meilleure protection du ou des panneaux sous vide. De plus, le dispositif (respectivement le procédé de fabrication explicité ci-après) selon l'invention évite les problèmes d'irrégularités de surface observés le cas échéant avec les procédés par collage. Plusieurs panneaux sous vide peuvent en outre être avantageusement revêtus d'une seule et même enveloppe de matériau polymère en une seule étape.

Les aiguilles sont destinées au maintien et/ou au positionnement des panneaux sous vide dans le moule pendant le moulage, en particulier avant et pendant l'injection de la matière polymère et sont retirées généralement avant l'ouverture du moule, permettant ainsi à la matière polymère de s'expanser et de remplir les espaces précédemment occupés par les aiguilles, le matériau expansé obtenu étant ainsi dépourvu de trous (pouvant poser problème en matière d'isolation) aux endroits correspondants aux emplacements des aiguilles.

Selon l'invention, le dispositif comprend au moins deux types d'aiguilles à fonctions distinctes, au moins une partie des aiguilles (de l'un et/ou de l'autre type), et avantageusement une majorité voire l'ensemble des aiguilles étant rétractable(s) :
- un premier type d'aiguilles formé d'une ou avantageusement de plusieurs aiguilles dites de positionnement, permettant de caler, généralement en au moins deux et en particulier en au moins trois côtés (selon l'inclinaison, horizontale ou préférentiellement verticale des parois du moule), chaque panneau sous vide (chaque panneau étant logé entre les aiguilles définissant son emplacement comme illustré ultérieurement) à un emplacement approprié sur (ou le long de) une paroi du moule, lesdites rétractable(s);
- un second type d'aiguilles formé d'une ou de préférence de plusieurs aiguilles dites de maintien, permettant de caler ou maintenir en place par butée chaque panneau sous vide à une distance définie de la ou des parois du moule, et garantissant, notamment lors de la phase d'injection du matériau polymérique, l'écartement entre les panneaux sous vide et la ou les paroi(s) portant lesdites aiguilles, lesdites aiguilles étant rétractables.

Dans le cas où une seule paroi du moule est équipée d'aiguilles, la distance de la paroi opposée peut être définie pour laisser l'écartement recherché entre le panneau sous vide et la paroi opposée à celle portant les aiguilles ; alternativement, les deux parois (ou toutes les parois du moule) peuvent être équipées de l'un et/ou de l'autre type(s) d'aiguilles.

Les aiguilles, maintenant les panneaux sous vide à un emplacement et à une distance données des parois du moule et laissant ainsi un espace entre les panneaux et lesdites parois (et généralement entre les panneaux eux-mêmes quand il y en a plusieurs), permettent de réaliser un moulage de part et d'autre du ou des panneaux. Une fois les panneaux en place dans le moule et après fermeture (au moins partielle) dudit moule, un espace libre entre le ou les panneaux et avantageusement chacune des parois internes du moule est généré (de même que généralement entre chacun des panneaux) et peut-être rempli de matériau polymérique afin d'obtenir le produit isolant selon l'invention.

Comme indiqué selon l'invention, les aiguilles sont rétractables dans l'épaisseur de la paroi du moule, généralement après l'injection, et au plus tard avant durcissement complet du matériau d'encapsulation, afin notamment de laisser la place au matériau polymérique, sans trace ou évidement pouvant poser des problèmes en matière d'isolation, et afin le cas échéant de pouvoir retirer le produit moulé hors du moule.

La longueur des aiguilles en position sortie de la paroi correspond, selon les cas, sensiblement à l'épaisseur de matériau polymère recherchée en la face concernée du produit moulé visé (en particulier pour les aiguilles de maintien), additionnée le cas échéant de tout ou partie de l'épaisseur du panneau sous vide (pour les aiguilles de positionnement), voire de l'épaisseur du matériau polymère sur la face opposée du panneau sous vide (aiguilles de positionnement formant butée sur la face du moule opposée à celle portant les aiguilles). Les aiguilles de positionnement présentent une longueur plus importante que les aiguilles de maintien, étant notamment destinées à maintenir les panneaux par leur chant tandis que les aiguilles de maintien viennent seulement en butée sur l'une des faces principales du panneau positionné en regard.

Avantageusement, la surface interne (à l'intérieur du moule) d'au moins l'une des parois internes du moule est profilée de façon à conférer la forme choisie au produit isolant obtenu par moulage. En particulier, au moins l'une des parois du moule, sur sa face interne, est profilée de façon à comprendre une pluralité de cavités et zones en saillie destinées à correspondre au négatif de la face externe du produit moulé, les cavités formant des éléments en reliefs sur le produit fini et les zones en saillie formant des creux dans ledit produit. Dans le mode de réalisation selon l'invention permettant d'obtenir un produit avantageux pour l'isolation de sols comme mentionné ultérieurement, les cavités de la ou des parois peuvent en particulier être cylindriques, et certaines zones en saillie peuvent former des nervures longitudinales, en particulier espacées régulièrement. Le produit moulé obtenu présente alors en correspondance des reliefs à section circulaires et des rainures longitudinales comme illustré ultérieurement.

Les aiguilles sont généralement régulièrement agencées sur au moins une paroi (en particulier profilée comme décrit précédemment), et se présentent par exemple sous forme d'une pluralité de tiges qui s'étendent transversalement à la paroi, ces tiges étant disposées en plusieurs endroits pour délimiter un ou des cadres à l'intérieur du ou desquels est ou sont destiné(s) à être accueilli(s) (respectivement) un ou des panneaux sous vide, le chant de chaque panneau coopérant avec les tiges les plus longues (aiguilles de positionnement) le bordant et l'une des faces du panneau venant en butée contre les tiges les plus courtes (aiguilles de maintien) en regard.

Le matériau polymérique injecté dans le moule étant avantageusement destiné à s'expanser, le dispositif selon l'invention comporte en outre généralement des orifices d'injection de gaz et/ou de fluide, en particulier d'injection de vapeur d'eau, ce gaz et/ou fluide, le cas échéant chauffé, pouvant notamment agir comme agent d'expansion pour le matériau polymérique, et favorisant l'expansion dudit matériau une fois injecté dans les espaces libres du moule.

Le matériau polymère injecté dans le moule peut être déjà en partie moussé (ou pré-expansé) ou non avant injection, et est apte à s'expanser et à se solidifier, en particulier par l'action de la chaleur et/ou de la vapeur d'eau, afin d'obtenir le produit selon l'invention présentant une enveloppe unitaire en matériau(x) polymérique(s) à l'état rigide (par exemple une enveloppe en mousse rigide de polystyrène expansé, de polyuréthane, de polyisocyanurate, et/ou phénolique, etc.). De préférence, on utilise (ou injecte) au moins un matériau de type polystyrène (EPS). L'utilisation d'un autre polymère tel qu'un polyuréthane (PU), un polyisocyanurate (PIR) ou un polymère de type phénolique, etc., peut également être envisagée, ces matériaux constituant des matériaux isolant thermiquement. Les ou les matériaux injectés sont dosés en fonction du volume à occuper dans le moule.

De préférence, au moins l'une (et généralement une seule) des parois du moule comprend également des moyens d'éjection et/ou de poussée (ou valves ou buses d'éjection), par exemple à commande pneumatique, destinés à assurer l'éjection du produit moulé hors du moule.

L'invention est également relative à un procédé de fabrication, en particulier mis en œuvre par le dispositif de moulage tel que défini, caractérisé en ce qu'il comporte les étapes de :
- positionnement, en regard et à distance d'au moins une paroi d'un moule, comportant en au moins l'une de ses parois internes une ou des aiguilles rétractables, d'au moins un panneau sous vide à l'aide desdites aiguilles, le panneau sous vide étant notamment mis en butée contre au moins une partie desdites aiguilles,
- fermeture (au moins en partie, généralement quasi-complète ou complète) du moule,
- injection d'au moins une matière polymère dans le moule,
- expansion de ladite matière polymère, le cas échéant par l'injection d'un gaz et/ou d'un fluide (en particulier de vapeur d'eau) et/ou par chauffage,
- rétraction, instantanée ou progressive, des aiguilles, avant durcissement de la matière polymère injectée et expansée,
- éventuellement application d'une pression supplémentaire sur le moule (pour fermer davantage le moule), de façon notamment à rendre l'enveloppe polymère plus compacte,
- ouverture du moule et extraction du ou des produits obtenus (panneaux sous vide dans la matière polymère rigide).

Avantageusement, plusieurs panneaux sous vide sont installés dans le moule de manière adjacente et espacée, chaque panneau étant placé dans une zone spécifique du moule.

L'injection du matériau isolant est généralement faite transversalement aux plans principaux des parois, c'est-à-dire transversalement aux faces principales des panneaux sous vide, ces derniers se présentant généralement sous forme de panneaux rectangulaires et étant positionnés de manière coplanaire et espacée et orientés verticalement ou horizontalement selon, notamment, la disposition des parois du moule et leur disposition dans le produit fini.

Le produit d'isolation thermique obtenu selon l'invention est décrite par l'objet de la revendication 4. L'enveloppe de matériau isolant est ainsi monobloc garantissant une solidarisation complète, sans joints, et pérenne, au(x) panneau(x) sous vide.

Avantageusement, le produit est profilé ou texturé sur au moins l'une de ses faces principales. Il comporte en particulier des zones creuses, ayant préférentiellement une profondeur de l'ordre de quelques millimètres (et généralement de moins de 20 mm), correspondant notamment à des volumes d'accueil destinés à loger des tuyaux, en particulier de chauffage. L'alternance de portions en relief et en creux selon un écartement approprié procure notamment des canaux pour le passage de tuyaux rapportés. Les portions en relief présentent également de préférence une forme circulaire permettant un guidage pour le cheminement des tuyaux dans diverses directions, ainsi qu'un maintien en place de ces derniers sans nécessiter de moyens de fixation supplémentaires. Les portions en relief présentent le cas échéant des surfaces planes en hauteur qui peuvent être coplanaires. Ces surfaces planes peuvent permettre l'apposition de marques, tel que des logos ou autres (logos de sociétés, normes, pictogrammes, etc.).

Selon l'invention, le produit comporte plusieurs panneaux sous vide et comprend de préférence des portions creuses ou en saillie indiquant l'emplacement desdits panneaux et formant des moyens de repérage de découpe du produit dans des zones entre les panneaux. Il est ainsi aisé de découper un produit aux dimensions requises lors de son utilisation, sans risquer d'abîmer les panneaux sous vide lors de la découpe. Le produit selon l'invention incorporant plusieurs panneaux sous vide peut ainsi être découpé à façon, il n'est par conséquent plus nécessaire de stocker plusieurs formats de produits isolants.

Le produit obtenu selon l'invention présente généralement un coefficient de conductivité thermique λ inférieur à 20 mW/mK.

La présente invention va maintenant être décrite à l'aide d'exemples illustratifs et nullement limitatifs, à partir des figures ci-jointes dans lesquelles :
- La figure 1 est une vue schématique en perspective et de côté du dispositif de fabrication en position ouverte du moule;
- La figure 2 représente une vue schématique en perspective d'une variante de la face interne apparente de la figure 1;
- La figure 3 illustre une vue schématique partielle de côté du moule de la figure 1 en position fermée;
- La figure 4 est une vue en perspective d'une paroi interne (ou d la face interne d'une paroi) du moule ;
- La figure 5 représente le positionnement de plusieurs panneaux sous vide dans le moule (sur une des parois du moule correspondant à celle représentée en figure 2) avant injection du matériau polymère;
- La figure 6 est une vue en perspective de dessus et partiellement découpé du produit obtenu selon l'invention ;
- La figure 7 illustre une vue en perspective de dessus du produit selon l'invention dans un exemple d'utilisation.

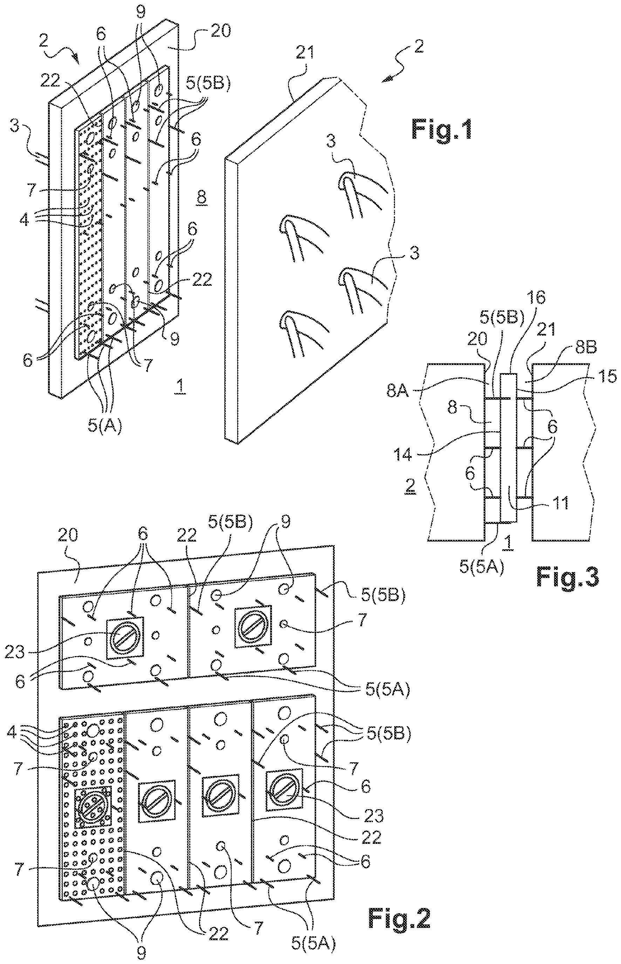

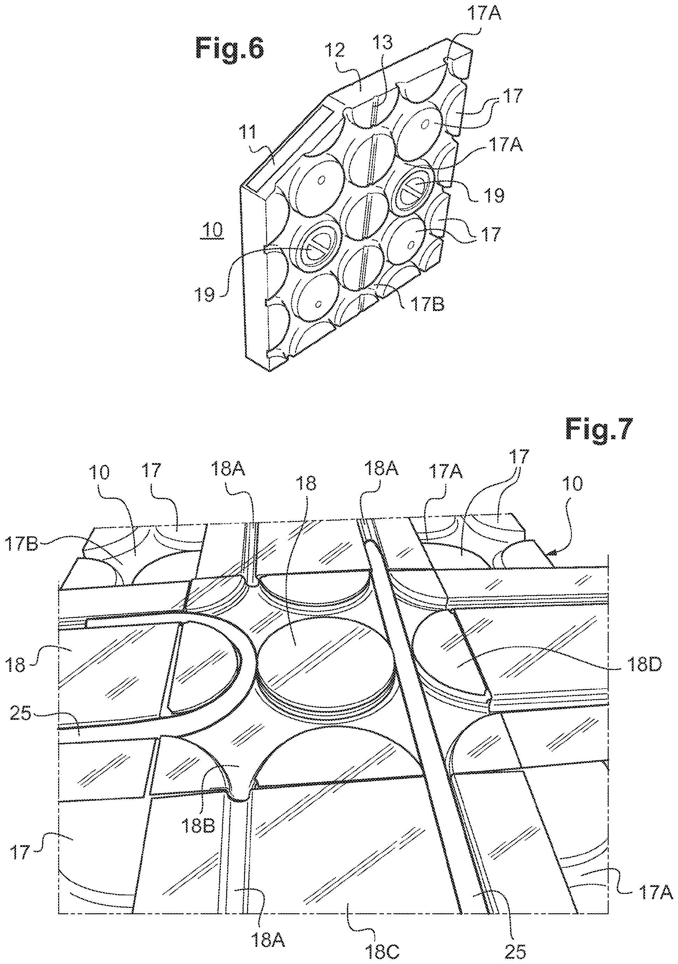

Le dispositif de fabrication 1 de l'invention (dont différentes parties sont visibles en figures 1 à 5) permet de fabriquer un produit thermiquement isolant 10 (visible sur la figure 6), ce produit comprenant un ou plusieurs panneaux isolants sous vide 11, nommés VIP.

Comme illustré en figure 6, le produit thermiquement isolant 10 selon l'invention, obtenu par les dispositif et procédé de l'invention, et ici découpé pour visualiser son intérieur, comprend au moins un panneau sous vide 11 dans une enveloppe unitaire 12 en matériau polymérique rigide thermiquement isolant. Le produit 10 présente généralement une forme approximativement parallélépipédique.

Les dispositif et procédé de l'invention permettent de surmouler le ou les panneaux sous vide qui sont ainsi solidarisés et logés dans une enveloppe unitaire rigide en matériau isolant recouvrant à la fois les faces principales opposées du ou des panneaux et l'ensemble de la périphérie de leurs chants. L'enveloppe 12 assure la protection des panneaux et assure également une fonction supplémentaire d'isolation thermique. Les dispositif et procédé selon l'invention simplifient la fabrication des produits à base de panneaux sous vide recouverts d'un matériau de protection isolant thermiquement, et fournissent un mode d'association du matériau de protection différent de celui connu par collage et garantissant une solidarisation pérenne des constituants. Le dispositif de l'invention permet de loger dans une seule enveloppe plusieurs panneaux sous vide, d'élaborer l'épaisseur souhaitée, et de fournir au produit fini une surface externe profilée aux formes désirées.

Comme illustré en figure 6, le produit obtenu peut comprendre avantageusement des lignes ou rainures de repérage 13 et des pictogrammes 19 identifiant la position des panneaux sous vide à l'intérieur de l'enveloppe 12, afin de permettre le découpage en suivant par exemple les lignes de repérage 13 sans risque de percer les panneaux sous vide. Le profil de la surface externe du produit 10 sera détaillé plus loin au regard d'un exemple d'utilisation dudit produit.

Comme illustré en figures 1 à 5, le dispositif de fabrication selon l'invention 1 comprend notamment un moule 2, des moyens 3 (une partie seulement de ces moyens étant schématiquement représentée) d'alimentation (en particulier du matériau polymérique et/ou de l'air pour la rétraction pneumatique des aiguilles ou l'éjection des produits, etc), avec des orifices ou moyens d'injection du matériau polymérique 7 et le cas échéant des orifices d'introduction de la vapeur d'eau 4 (uniquement représentés sur une partie d'une paroi interne du moule, correspondant à l'emplacement d'un panneau, pour une meilleure compréhension des figures) débouchant à l'intérieur du moule (la vapeur d'eau étant acheminée derrière la ou les parois du moule et introduite pour favoriser l'expansion de la matière polymère après injection dans le moule), des aiguilles de positionnement 5 aptes à caler les panneaux 11 dans le moule avant injection du matériau polymérique, et des aiguilles de maintien 6 destinées à maintenir l'espacement voulu entre les panneaux et le moule afin d'obtenir l'épaisseur désirée de matériau polymérique. Des buses d'air comprimé ou moyens d'éjection pneumatique 9 peuvent également être prévus pour extraire le produit fini.

Le moule 2 comporte deux parois (internes) 20 et 21 délimitant une cavité 8 dans laquelle sont destinés à être logés de manière adjacente les panneaux sous vide 11 et dans laquelle est destiné à être injecté le matériau polymérique. La première paroi 20 est généralement fixe tandis que la seconde paroi 21 est généralement mobile pour l'ouverture et la fermeture du moule et l'accès à l'intérieur.

Les faces (internes) des parois 20 et 21 du moule s'étendent selon deux plans opposés parallèles et espacés. Ces parois sont agencées de préférence verticalement pour un meilleur accès à l'intérieur du moule (pour installer les panneaux sous vide puis retirer le produit sous forme de plaques), mais elles pourraient également être horizontales par exemple..

Les dimensions des panneaux sous vide sont par exemple, pour chacun des panneaux, de 580 mm de longueur, 280 mm de largeur et 3 cm d'épaisseur (chant).

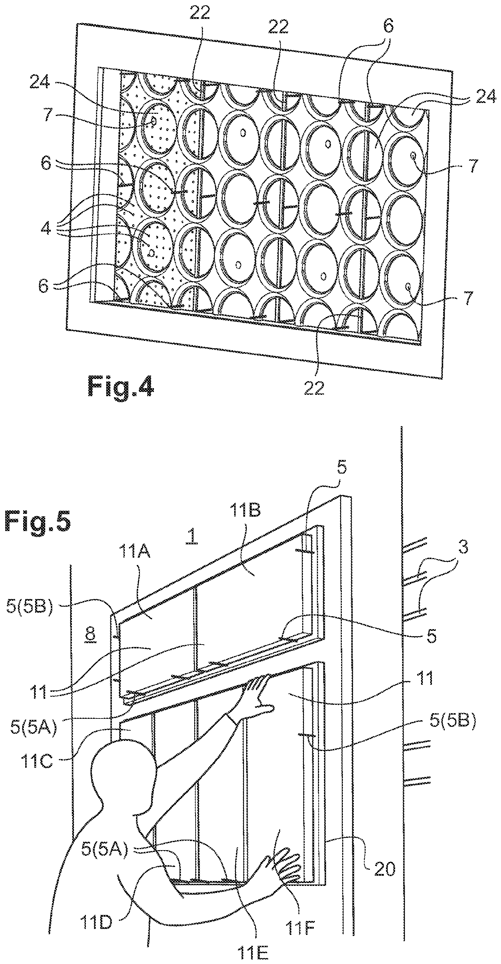

De préférence, le moule 2 est dimensionné pour fabriquer plusieurs plaques de produits finis thermiquement isolants, chaque plaque incorporant plusieurs panneaux sous vide. Des plaques peuvent être positionnées dans le sens vertical et d'autres dans le sens horizontal au sein du même moule afin d'optimiser l'espace ou de varier les profils des produits recherchés (les parois du moule présentant alors plusieurs texturations ou reliefs différents). Ainsi, comme illustré en figure 5 et à titre d'exemple, pour obtenir une première configuration de plaque (par exemple aux dimensions finales de 1,2 m par 0,3 m), deux panneaux sous vide 11A et 11B sont agencés côte à côte sans être aboutés, leurs grands côtés s'étendant selon une direction perpendiculaire à la verticale, et pour obtenir une seconde configuration de plaque (par exemple de 1,2 m par 0,6 m), quatre panneaux sous vide 11C à 11F sont disposés de manière adjacente et non aboutés en présentant leurs grands côtés selon la verticale.

La figure 3 illustre en vue de côté l'agencement d'un panneau sous vide dans le moule fermé. Chaque panneau 11 présente deux faces principales opposés 14 et 15 et un chant périphérique 16, les faces 14 et 15 étant mises en regard des faces internes respectives 20 et 21 des parois du moule et à distance de celles-ci, délimitant avec lesdites faces internes 20 et 21, des espaces respectifs 8A et 8B destinés à être comblés au cours du procédé par le matériau polymérique isolant. Le maintien des panneaux verticalement aux parois est assuré par les aiguilles 5, 6.

Le matériau polymérique isolant destiné à être injecté est un matériau apte à s'expanser après injection. Le volume injecté est dosé pour occuper le volume de la cavité 8, plus particulièrement les espaces 8A et 8B entre les panneaux et respectivement les faces internes 20 et 21 des parois, et un espace en périphérie du chant 16 des panneaux.

Des canaux d'alimentation du matériau sont disposés à l'arrière du moule et connectés aux orifices d'injection 7 débouchant à l'intérieur du moule, dans la cavité 8. Le matériau est délivré face aux panneaux. Le nombre d'orifices 7 est adapté au volume à remplir de matériau injecté.

Le matériau polymérique est par exemple du polystyrène. Ce matériau peut être injecté à température ambiante sous une forme déjà pré-expansée (par exemple sous forme de particules solides), le matériau étant apte à (complètement) s'expanser et se solidifier à la température de la vapeur d'eau. Le matériau peut par exemple se présenter sous forme liquide ou sous forme de granulés ou billes (par exemple de 1 mm de diamètre, etc.), etc...

Selon le type de matériau injecté, des canaux d'alimentation distincts et/ou d'autres orifices d'injection 4 sont le cas échéant prévus pour délivrer un agent gonflant tel que de la vapeur d'eau, participant à l'expansion du matériau injecté, en particulier pour du polystyrène. L'injection et la solidification/le durcissement du matériau est rapide, de l'ordre de trente secondes à moins de deux minutes.

Comme indiqué précédemment, le dispositif 1 comprend des aiguilles 5, 6 qui permettent de positionner et retenir les panneaux dans le moule avant injection du matériau et jusqu'à sa solidification. Les aiguilles de positionnement 5 sont formées d'une pluralité de tiges rigides se développant transversalement et depuis la surface interne 20 de la première paroi fixe. Les tiges 5 sont disposées et espacées les unes des autres de façon à délimiter un cadre à l'intérieur duquel chaque panneau est agencé. En figures 1, 2, 3 et 5 sont par exemple illustrées des tiges 5A positionnées en partie inférieure sur lesquelles reposent les panneaux par leur chant inférieur horizontal, et des tiges 5B latérales contre lesquelles s'appuie le chant latéral vertical des panneaux. Les tiges présentent une longueur adaptée allant jusqu'à tout ou partie de la largeur du chant des panneaux, de sorte à assurer le positionnement et maintien desdits panneaux.

Les aiguilles 5 sont mobiles, en particulier sont rétractables dans l'épaisseur de la paroi fixe 20. Les tiges sont destinées à être rentrées dans la paroi afin de ne plus faire saillie, au cours de l'injection ou immédiatement après la fin de l'injection du matériau, et au moins avant solidification du matériau expansé, de façon à ne pas laisser de traces et pouvoir dégager librement le produit fini hors du moule.

En outre, le dispositif 1, en particulier au moins la paroi fixe 20 du moule, comprend des aiguilles de maintien 6 permettant de mettre le panneau sous vide à distance choisie de la paroi fixe 20, et de maintenir ledit panneau à cette distance lors de l'injection de la matière, cette distance correspondant à l'épaisseur à donner au matériau polymérique de revêtement 12 du produit fini. Les aiguilles servent de butées pour les panneaux de sorte également à s'opposer le cas échéant à la pression exercée par le matériau polymérique en cours de son injection notamment du côté de la face opposée desdits panneaux.

De préférence, plusieurs aiguilles de maintien sont agencées à plusieurs endroits au moins de la surface interne 20 de la paroi fixe, et sont destinées à être en regard de (l'une des) faces principales des panneaux sous vide. Elles sont avantageusement mobiles, en particulier mobiles en translation et rétractables dans l'épaisseur de la paroi.

Du fait de leur mobilité, elles peuvent faire saillie le cas échéant à la distance souhaitée hors de la paroi, permettant ainsi une adaptation de la largeur d'écartement, et donc de l"épaisseur à obtenir du matériau d'encapsulation. L'épaisseur du matériau polymérique peut être différente selon le côté considéré et être par exemple d'un ou plusieurs millimètres, cette épaisseur ne dépassant pas par exemple 10 mm (de chaque côté).

La section des aiguilles est par exemple de 3 à 5 mm. Avant positionnement des panneaux, les aiguilles 6 font saillie hors de la surface interne de la paroi 20, (et respectivement le cas échéant de la surface interne de l'autre paroi 21 ou de chaque paroi comme illustré en figure 3). Elles sont rétractées au cours ou après l'injection, et au plus tard avant solidification du matériau injecté et expansé.

Les aiguilles sont de préférence en acier inoxydable afin de résister à la vapeur d'eau et à la pression. Avantageusement, le dispositif de l'invention est conçu pour entourer en une seule étape d'injection plusieurs panneaux sous vide. A cet effet, les aiguilles 5 et 6 sont réparties de façon à positionner plusieurs panneaux sous vide de manière coplanaire, à distance des deux parois 20 et 21, et écartés entre eux selon la verticale et/ou l'horizontal. En outre, afin de repérer ultérieurement l'espacement entre deux panneaux, ces panneaux étant invisibles de l'extérieur du produit fini, au moins l'une des parois internes, voire les deux parois 20 et 21 du moule sont profilées pour que les emplacements délimités par les aiguilles 5, et destinés à recevoir chacun un panneau sous vide, soient séparés par des nervures 22. Après injection de la matière, les nervures correspondent aux rainures ou gorges longitudinales 13 sur le produit fini (figure 6), ces rainures constituant des lignes de repérage pour l'utilisateur lui indiquant la position intérieure des panneaux (également signalés par des pictogrammes 19 de non découpage, les texturations ou reliefs 23 donnant ces pictogrammes (non représentés en figure 4) étant également prévus dans les parois correspondantes du moule), chaque panneau sous vide étant agencé entre deux rainures et à distance de celles-ci. L'utilisateur peut ainsi découper le produit aux endroits des rainures sans risquer de percer les panneaux sous vide.

Par ailleurs, l'une et/ou l'autre parois internes du moule peuvent être profilées avec des découpes, formes en saillie et/ou empreintes aux géométries diverses pour constituer sur le produit fini et dans l'épaisseur du matériau polymérique solidifié, des formes fonctionnelles et/ou de marquage (par exemple des pictogrammes comme vu précédemment, et/ou un logo). Des exemples de formes fonctionnelles sont décrits ci-après. La surface de chaque paroi du moule constitue le négatif de la surface correspondante du produit fini, les empreintes du moule correspondant le cas échéant à des formes en saillie ou à des protubérances sur le produit fini, et la surface plane du moule et les formes en saillie correspondant le cas échéant aux creux dans le produit fini.

A titre d'exemple, comme illustré en figure 4 et afin d'obtenir le produit illustré en figure 6:
- La face interne d'une paroi (par exemple la 21) comporte des évidements circulaires 24 à fond plat dans lesquels est destiné à se loger le matériau injecté pour former sur le produit fini (figure 6) des reliefs 17 à section circulaire et surface plane.
- Le fond de certains évidements circulaires peut comprendre d'autres empreintes et/ou cavités (non illustrées) pour dessiner des marquages 19 sur la face plane de certains reliefs 17 du produit fini (figure 6). L'autre paroi peut également présenter les mêmes marquages 23, non nécessairement sur des reliefs (en figure 6, le produit obtenu présente une face opposée (non apparente sur la figure) approximativement plane mais présentant également les marquages 13 et 19).
- La ou les parois comprennent les nervures longitudinales 22 décrites ci-dessus pour former les rainurages 13 sur le produit fini.

Enfin, au moins l'une des faces des parois du moule, telle que la face de la paroi fixe 20 peut incorporer des moyens mobiles d'éjection 9. Ces moyens sont dissimulés dans l'épaisseur de la paroi et ne s'extraient hors de la face interne 20 qu'après finition du produit moulé pour assurer son éjection par poussée. Les figures 1 et 2 montrent ces moyens dans leur état refoulé à l'intérieur de la paroi, sans que ceux-ci ne fassent saillie. Les aiguilles et les moyens mobiles d'éjection peuvent être par exemple avantageusement à commande (électro)pneumatique.

La fabrication s'opère de la façon suivante :
- ouverture du moule, la paroi mobile 21 étant suffisamment espacée de l'autre paroi fixe 20 pour introduire un ou plusieurs panneaux, de préférence plusieurs panneaux ;
- positionnement et maintien des panneaux en regard et à distance de la paroi fixe 20 du moule à l'aide des aiguilles 5 de la paroi fixe 20, les aiguilles 6 de la paroi fixe étant sorties et en butée contre les panneaux ;
- fermeture du moule en mettant en regard et à distance du panneau la paroi mobile 21 du moule,
- injection avec dosage du matériau polymérique, en particulier depuis les parois 20 et 21 du moule, afin que le matériau injecté se répande et occupe après expansion les espaces 8A et 8B séparant les panneaux des parois du moule, et les côtés des panneaux pour recouvrir l'ensemble du chant périphérique des panneaux ;
- avant la fin de l'expansion du matériau et son durcissement total, les aiguilles 5 et 6 se rétractent à l'intérieur de l'épaisseur des parois 20 (et éventuellement 21 si ces dernières possèdent des aiguilles)
- Eventuellement déverrouillage de la paroi mobile et application d'une pression supplémentaire sur la paroi mobile 21 du moule pour le fermer davantage et compacter le polymère une fois l'espace 8B rempli par le matériau polymérique et l'expansion du matériau en cours ou réalisé,
- ouverture du moule en écartant la paroi mobile 21 de la paroi fixe ;
- extraction des panneaux revêtus.

La figure 7 montre un exemple nullement limitatif d'utilisation du produit thermiquement isolant 10 de l'invention. Le produit est utilisé en tant que sous-couche isolante pour plancher chauffant.

Le produit 10 est surmonté de plaques métalliques 18 (surfaces hachurées), par exemple en aluminium, et pourvu d'un réseau de tuyaux/conducteurs calorifiques 25, les plaques métalliques assurant une diffusion surfacique de la chaleur générée par les conducteurs.

Par le procédé selon l"invention, le produit 10 selon l'invention est à surface externe profilée. Ce produit comprend ainsi des reliefs à section circulaire 17 qui sont alignés et espacés pour ménager des chemins linéaires 17A et courbes 17B (voir également figure 6). Les plaques métalliques 18 sont mises en forme, en particulier par emboutissage, de façon à présenter un profil de coopération complémentaire à la surface profilée du produit isolant 10 et dessiner des chemins correspondants linéaires 18A et courbes 18B.

Les plaques 18 sont posées par emboîtement sur la surface du produit 10. Elles présentent par exemple des formes de géométrie parallélépipédique 18C délimitant des gorges ou canaux longitudinaux 18A. Ces formes chapeautent les reliefs 17 à section circulaire tandis que les canaux 18A s'insèrent dans les chemins linéaires du produit 10, et sont aptes à accueillir les tuyaux 25 selon un cheminement linéaire. Elles présentent également le cas échéant des formes cylindriques ou en partie cylindrique 18D qui chapeautent les reliefs 17 à section circulaire du produit isolant 10. Les pourtours des formes cylindriques ou semi-cylindriques fournissent des lignes courbes 18B. Ainsi, les gorges 18A et les espaces 18B délimitent des chemins de guidage et logements d'accueil pour les tuyaux 25 qui peuvent ainsi cheminer dans diverses directions de manière linéaire ou courbe par coincement sans nécessiter de moyens de fixation.

Les dimensions des espaces de séparation des reliefs 17 du produit isolant 10 sont bien entendu adaptées aux dimensions des tuyaux à loger.

Des variantes du dispositif de l'invention, en particulier de forme dans le moule, peuvent être réalisées sans sortir du cadre de l'invention.

Le produit d'isolation thermique 10 peut présenter des faces externes aux profils identiques ou non. Il peut être utilisé avec avantages pour l'isolation de surfaces, notamment de sols dans lesquels des tuyaux de chauffage doivent être intégrés.

## Revendications

1. Dispositif de moulage (1) pour l'obtention en une seule étape d'un produit d'isolation thermique (10) comprenant au moins un panneau isolant sous vide enveloppé dans au moins un matériau polymérique, comprenant un moule (2) doté d'au moins deux parois internes (20, 21), comprenant un ou des orifices (7) pour l'introduction d'au moins un matériau polymère à l'intérieur du moule, et comportant en au moins l'une de ses parois internes, des aiguilles rétractables (5,6), ledit dispositif comprenant au moins deux types d'aiguilles :
- plusieurs aiguilles de positionnement (5) permettant de caler en au moins deux côtés, chaque panneau sous vide, en maintenant lesdits panneaux par leur chant, au moins une partie desdites aiguilles étant préférentiellement rétractable(s) ; et
- plusieurs aiguilles de maintien (6), permettant de caler chaque panneau sous vide à distance de la ou des parois internes du moule en venant en butée sur l'une des faces principales du panneau positionné en regard, lesdites aiguilles étant rétractables, les aiguilles de positionnement présentant une longueur plus important que les aiguilles de maintien.

2. Dispositif selon la revendication 1, **caractérisé en ce qu'**il comporte en outre des orifices d'injection de gaz et/ou de fluide (4), en particulier d'injection de vapeur d'eau, et/ou des moyens d'éjection et/ou de poussée (9) du produit moulé hors du moule.

3. Procédé de fabrication, en particulier mis en oeuvre par le dispositif de moulage selon l'une des revendications précédentes, **caractérisé en ce qu'**il comporte les étapes de :
- positionnement, en regard et à distance d'au moins une paroi (20) d'un moule (2), comportant en au moins l'une de ses parois internes (20, 21) une ou des aiguilles rétractables (5,6), d'au moins un panneau sous vide (11) à l'aide desdites aiguilles, le panneau sous vide étant notamment mis en butée contre au moins une partie desdites aiguilles,
- fermeture du moule,
- injection d'au moins une matière polymère dans le moule,
- expansion de ladite matière polymère, le cas échéant par l'injection d'un gaz et/ou d'un fluide et/ou par chauffage,
- rétraction, instantanée ou progressive, des aiguilles (5, 6), avant durcissement de la matière polymère injectée et expansée,
- éventuellement application d'une pression supplémentaire sur le moule de façon notamment à rendre l'enveloppe polymère plus compacte,
- ouverture du moule (2) et extraction du ou des produits.

4. Produit d'isolation (10), notamment pour revêtement de sol, destiné par exemple à être intégré dans un plancher chauffant, et en particulier obtenu selon le procédé de la revendication précédente, comprenant plusieurs panneaux isolants sous vide (11, 11A, 11B, 11C, 11D, 11E, 11F) tous entièrement entourés d'une même enveloppe unitaire rigide (12) en matériau polymère.

5. Produit d'isolation thermique selon la revendication 4, **caractérisé en ce que** le matériau polymère est thermiquement isolant.

6. Produit d'isolation selon l'une des revendications 4 à 5, **caractérisé en ce que** le produit est profilé ou texturé sur au moins l'une de ses faces principales.

7. Produit d'isolation selon la revendication précédente, **caractérisé en ce qu'**il comporte des zones creuses (17A, 17B), en particulier de l'ordre de quelques millimètres de profondeur, notamment de moins de 20 mm de profondeur, notamment pour le passage de tuyaux, en particulier de chauffage.

8. Produit d'isolation selon l'une des revendications 4 à 7, **caractérisé en ce qu'**il comprend des portions creuses (13) ou en saillie (17) indiquant l'emplacement des panneaux et formant des moyens de repérage de découpe du produit dans des zones entre les panneaux.

9. Produit d'isolation selon l'une des revendications 4 à 8, **caractérisé en ce que** le matériau polymère est du polystyrène expansé.

10. Produit d'isolation selon l'une des revendications 4 à 8, **caractérisé en ce que** le matériau polymère est du polyuréthane, du polyisocyanurate et/ou un polymère phénolique.

## Patentansprüche

1. Formvorrichtung (1) zum Erhalten eines Wärmedämmungsprodukts (10) in einem einzigen Schritt, umfassend mindestens eine Vakuumdämmplatte, umwickelt mit mindestens einem Polymermaterial, umfassend eine mit mindestens zwei Innenwänden (20, 21) versehene Form (2), umfassend eine oder mehrere Öffnungen (7) zum Einbringen mindestens eines Polymermaterials in das Innere der Form, und umfassend einziehbare Nadeln (5, 6) auf mindestens einer ihrer Innenwände, wobei die Vorrichtung mindestens zwei Arten von Nadeln umfasst:
- mehrere Positionierungsnadeln (5), die es ermöglichen, jede der Vakuumplatten auf mindestens zwei Seiten zu verspannen, wobei die Platten an ihrer Kante gehalten werden, wobei mindestens ein Teil der Nadeln vorzugsweise einziehbar ist; und
- mehrere Haltenadeln (6), die es ermöglichen, jede Vakuumplatte von der Innenwand oder den Innenwänden der Form beabstandet zu verspannen und auf einer der gegenüberliegend positionierten Hauptflächen der Platte anzuliegen, wobei die Nadeln einziehbar sind, wobei die Positionierungsnadeln eine größere Länge als die Haltenadeln aufweisen.

2. Vorrichtung nach Anspruch 1, **dadurch gekennzeichnet, dass** sie ferner Gas- und/oder Fluideinspritzöffnungen (4) umfasst, insbesondere zum Einspritzen von Wasserdampf und/oder Mittel zum Ausstoßen und/oder Drücken (9) des geformten Produkts aus der Form.

3. Herstellungsverfahren, insbesondere implementiert durch die Formvorrichtung nach einem der vorhergehenden Ansprüche, **dadurch gekennzeichnet, dass** es die Schritte umfasst:
- Positionieren gegenüber und beabstandet von mindestens einer Wand (20) einer Form (2), die auf mindestens einer ihrer Innenwände (20, 21) eine oder mehrere einziehbare Nadeln (5, 6) umfasst, mindestens einer Vakuumplatte (11) mit Hilfe der Nadeln, wobei die Vakuumplatte insbesondere an mindestens einem Teil der Nadeln anliegt,
- Schließen der Form,
- Einspritzen von mindestens einem Polymermaterial in die Form,
- Expandieren des Polymermaterials, falls erforderlich durch Einspritzen eines Gases und/oder eines Fluids und/oder durch Erhitzen,
- sofortiges oder fortschreitendes Zurückziehen der Nadeln (5, 6) vor dem Aushärten des eingespritzten und expandierten Polymermaterials,
- möglicherweise Ausüben eines zusätzlichem Drucks auf die Form, um insbesondere die Polymerhülle kompakter zu gestalten,
- Öffnen der Form (2) und Extrahieren des oder der Produkte.

4. Dämmungsprodukt (10), insbesondere für Bodenbeläge, das beispielsweise in einen beheizten Boden integriert werden soll und insbesondere nach dem Verfahren des vorhergehenden Anspruchs erhalten wird, umfassend mehrere Vakuumdämmplatten unter Vakuum (11, 11A, 11B, 11C, 11D, 11E, 11F), die alle vollständig von derselben starren einheitlichen Hülle (12) aus Polymermaterial umgeben sind.

5. Wärmedämmungsprodukt nach Anspruch 4, **dadurch gekennzeichnet, dass** das Polymermaterial wärmedämmend ist.

6. Dämmungsprodukt nach einem der Ansprüche 4 bis 5, **dadurch gekennzeichnet, dass** das Produkt auf mindestens einer seiner Hauptflächen profiliert oder strukturiert ist.

7. Dämmungsprodukt nach dem vorhergehenden Anspruch, **dadurch gekennzeichnet, dass** es Hohlzonen (17A, 17B) umfasst, insbesondere in der Größenordnung von einigen Millimetern Tiefe, insbesondere weniger als 20 mm Tiefe, insbesondere für den Durchgang von Rohren, besonders von Heizungsrohren.

8. Dämmungsprodukt nach einem der Ansprüche 4 bis 7, **dadurch gekennzeichnet, dass** es hohle (13) oder vorstehende (17) Abschnitte umfasst, die die Platzierung der Platten angeben und Mittel zum Lokalisieren des Schneidens des Produkts in Zonen zwischen den Platten bilden.

9. Dämmungsprodukt nach einem der Ansprüche 4 bis 8, **dadurch gekennzeichnet, dass** das Polymermaterial expandiertesPolystyrol ist.

10. Dämmungsprodukt nach einem der Ansprüche 4 bis 8, **dadurch gekennzeichnet, dass** das Polymermaterial Polyurethan, Polyisocyanurat und/oder ein Phenolpolymer ist.

## Claims

1. A molding device (1) for obtaining in one step a thermal insulation product (10) comprising at least one vacuum insulation panel enveloped in at least one polymer material, comprising a mold (2) provided with at least two inner walls (20, 21), comprising one or more orifices (7) for the introduction of at least one polymer material into the interior of the mold, and comprising in at least one of its inner walls, retractable needles (5, 6), said device comprising at least two types of needles:
- a plurality of positioning needles (5) making it possible to wedge each vacuum panel on at least two sides, by holding said panels at their edge, at least some of said needles being preferably retractable; and
- a plurality of holding needles (6), making it possible to wedge each vacuum panel at a distance from the inner wall or walls of the mold by coming into abutment against one of the main faces of the panel positioned opposite, said needles being retractable, the positioning needles having a greater length than the holding needles.

2. The device as claimed in claim 1, **characterized in that** it furthermore has gas and/or fluid injection orifices (4), in particular water vapor injection orifices, and/or means (9) for ejecting and/or for pushing the molded product out of the mold.

3. A production process, in particular implemented by the molding device as claimed in one of the preceding claims, **characterized in that** it comprises the steps of:
- positioning at least one vacuum insulation panel (11) opposite and at a distance from at least one wall (20) of a mold (2) having one or more retractable needles (5, 6) in at least one of its inner walls (20, 21), by means of said needles, the vacuum insulation panel being in particular placed in abutment against at least some of said needles,
- closing the mold,
- injecting at least one polymer material into the mold,
- expanding said polymer material, if necessary by injection of a gas and/or a fluid and/or by heating,
- instantaneously or gradually retracting the needles (5, 6), before hardening of the injected and expanded polymer material,
- optionally applying an additional pressure to the mold so as in particular to make the polymer envelope more compact,
- opening the mold (2) and extracting the product or products.

4. An insulation product (10), in particular for a floor covering, intended for example to be integrated in underfloor heating, and in particular obtained according to the process of the preceding claim, comprising a plurality of vacuum insulation panels (11, 11A, 11B, 11C, 11D, 11E, 11F) all entirely surrounded by one and the same rigid unitary envelope (12) made of polymer material.

5. The thermal insulation product as claimed in claim 4, **characterized in that** the polymer material is thermally insulating.

6. The thermal insulation product as claimed in one of claims 4 to 5, **characterized in that** the product is profiled or textured on at least one of its main faces.

7. The insulation product as claimed the preceding claim, **characterized in that** it has hollow zones (17A, 17B), in particular having a depth of around a few millimeters, in particular a depth of less than 20 mm, in particular for the passage of pipes, in particular heating pipes.

8. The insulation product as claimed in one of claims 4 to 7, **characterized in that** it comprises hollow (13) or projecting (17) portions that indicate the location of the panels and form means for indicating the cutting of the product in areas between the panels.

9. The insulation product as claimed in one of claims 4 to 8, **characterized in that** the polymer material is expanded polystyrene.

10. The insulation product as claimed in one of claims 4 to 8, **characterized in that** the polymer material is polyurethane, polyisocyanurate and/or a phenolic polymer.
